# EUROPEAN PATENT SPECIFICATION

(11) **EP 3 786 249 B1**
(45) Date of publication and mention of the grant of the patent: **22.10.2025**
(21) Application number: 19834595.1
(22) Date of filing: 11.07.2019
(51) Int. Cl.: C09J 133/08, C09J 133/10, C09J 7/40, C08F 220/18

(54) **ADHESIVE COMPOSITION AND NON-SUBSTRATE ADHESIVE TAPE**
KLEBSTOFFZUSAMMENSETZUNG UND SUBSTRATFREIES KLEBEBAND
COMPOSITION ADHÉSIVE ET RUBAN ADHÉSIF SANS SUBSTRAT

(30) Priority: 13.07.2018 KR 20180081725
(43) Date of publication of application: 03.03.2021
(73) Proprietor: LG CHEM, LTD., Yeongdeungpo-gu, Seoul 07336 (KR)
(72) Inventor: KIM, Sang Hwan, Daejeon 34122 (KR); SEO, Ki Seung, Daejeon 34122 (KR); KIM, Ji Hye, Daejeon 34122 (KR); YOON, Kyung Jun, Daejeon 34122 (KR); SEO, Kwang Su, Daejeon 34122 (KR)
(74) Representative: Plasseraud IP
(86) International application number: PCT/KR2019/008556
(87) International publication number: WO 2020/013624

(56) References cited:
- EP-A1- 3 739 012
- CN-B- 103 756 552
- CN-B- 103 865 405
- JP-A- 2016 011 338
- JP-B2- 5 986 242
- KR-A- 20140 085 299
- KR-A- 20160 084 569
- KR-A- 20170 048 440
- KR-A- 20170 048 440
- KR-A- 20170 051 707
- KR-A- 20170 051 707
- KR-A- 20170 070 370
- KR-A- 20170 115 197
- US-A1- 2017 121 562

## Description

### [Technical Field]

The present invention claims priority to and the benefit of Korean Patent Application No. 10-2018-0081725 filed in the Korean Intellectual Property Office on July 13, 2018. The present invention relates to an adhesive composition and a substrate-free adhesive tape including an adhesive layer including a cured product thereof.

### [Background Art]

Various members are attached to an electronic device by an adhesive agent. For example, various optical members such as a polarizing plate, a phase difference plate, an optical compensation film, a reflection sheet, a protection film, and a brightness-enhancing film may be attached to a liquid crystal display (LCD) by an adhesive agent. Recently, as the thickness of the electronic device becomes small, efforts to implement excellent durability while reducing the thickness of an adhesive layer for attaching members in the electronic device have been continuously made.

In order to reduce the thickness of the adhesive layer, an adhesive tape in the substrate-free form has been studied. However, when a substrate is not used, there may occur a problem in that a high-temperature shear characteristic, adhesive strength, and the like of the adhesive layer, and the like deteriorate. Further, electronic devices are manufactured using a continuous process, and in order to apply these substrate-free adhesive tapes to a continuous process, a separate stamping process is required. Accordingly, there is a problem in that the efficiency of the continuous process deteriorates.

Therefore, there is a need for a technology capable of implementing a substrate-free adhesive tape which has excellent high-temperature shear characteristic and adhesive strength, and is suitable for a continuous process. Adhesive compositions are disclosed in KR2014-0085299A and KR2017-0051707.

### [Detailed Description of Invention]

### [Technical Problem]

The present invention has been made in an effort to provide a substrate-free adhesive tape which is excellent in adhesive properties and suitable for a continuous process, and an adhesive composition capable of implementing the same.

However, a problem to be solved by the present invention is not limited to the aforementioned problem, and other problems that are not mentioned may be clearly understood by a person skilled in the art from the following description.

### [Technical Solution]

The invention is as per the appended claims. The present invention provides an adhesive composition including an acrylic copolymer in which a monomer mixture including: an alkyl group-containing (meth)acrylate monomer; a cyclic substituent-containing (meth)acrylate monomer including at least one of a cycloalkyl group-containing (meth)acrylate monomer and a hetero cycloalkyl group-containing (meth)acrylate monomer; a polar group-containing (meth)acrylate monomer wherein the polar functional group-containing monomer includes at least one of a carboxyl group-containing monomer, and a nitrogen-containing monomer; and a (meth)acrylate monomer represented by the following Formula 1 is copolymerized.

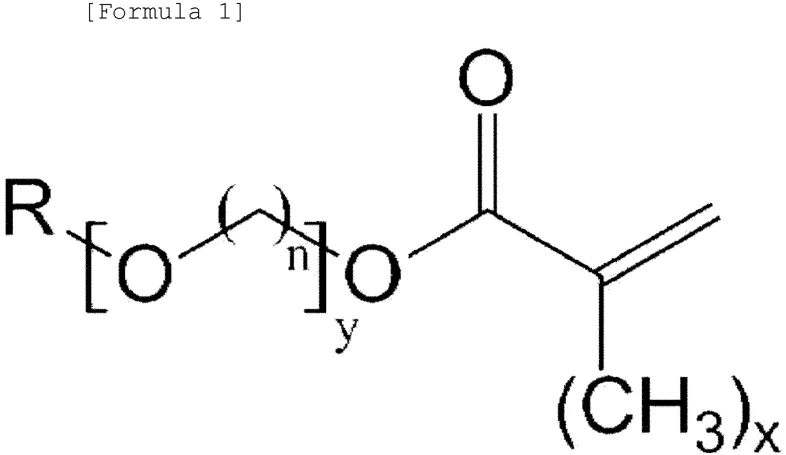

In Formula 1, R is hydrogen or a straight-chain or branched alkyl group having 1 to 5 carbon atoms, x is 0 or 1, y is an integer from 2 to 13, and n is an integer from 2 to 4.

Another exemplary embodiment of the present invention provides a substrate-free adhesive tape including: a release film; and an adhesive layer provided on one surface of the release film and including a cured product of the adhesive composition as per in the appended claims.

### [Advantageous Effects]

According to an exemplary embodiment of the present invention, the adhesive composition may implement an adhesive layer having shear properties suitable for a continuous process and an excellent adhesive strength.

The substrate-free adhesive tape according to an exemplary embodiment of the present invention has an advantage in that the substrate-free adhesive tape has shear characteristics suitable for a continuous process and the adhesive strength is excellent.

The effects of the present invention are not limited to the above-described effects, and effects, which are not mentioned, will be clearly understood by a person skilled in the art from the specification of the present application and the accompanying drawings.

### [Brief Description of Drawings]

FIG. 1 illustrates a substrate-free adhesive tape according to an exemplary embodiment of the present invention.
FIG. 2 schematically illustrates a roll to cell continuous process using a substrate-free adhesive tape according to an exemplary embodiment of the present invention.
FIG. 3 illustrates a process of measuring the fracture distance of an adhesive layer of a substrate-free transfer tape according to an exemplary embodiment of the present invention.
FIG. 4 illustrates a method of measuring the high-temperature shear strength of an adhesive layer of a substrate-free adhesive tape according to an exemplary embodiment of the present invention.
FIG. 5 is a view illustrating quality evaluation criteria of a fracture surface of an adhesive layer according to an exemplary embodiment of the present invention.

### [Best Mode]

Throughout the specification of the present application, when one part "includes" one constituent element, unless otherwise specifically described, this does not mean that another constituent element is excluded, but means that another constituent element may be further included.

Throughout the specification of the present application, when one member is disposed "on" another member, this includes not only a case where the one member is brought into contact with another member, but also a case where still another member is present between the two members.

Throughout the specification of the present application, the unit "part by weight" may mean a weight ratio between the respective components.

Throughout the specification of the present application, "(meth)acrylate" is used to collectively refer to acrylate and methacrylate.

Throughout the specification of the present application, "A and/or B" means "A and B, or A or B".

Throughout the specification of the present application, the term "monomer unit" may mean a form in which monomers react in a polymer, and specifically, may mean a form in which the monomer is subjected to a polymerization reaction to form a skeleton of the polymer, for example, a main chain or a side chain.

Throughout the specification of the present application, "a weight average molecular weight" and "a number average molecular weight" of a compound may be calculated by using a molecular weight and a molecular weight distribution of the compound. Specifically, a sample specimen in which a concentration of a compound is 1 wt% is prepared by putting tetrahydrofuran (THF) and the compound into a 1-ml glass bottle, a standard specimen (polystyrene) and the sample specimen are filtered through a filter (pore size of 0.45 µm), and then the elution time of the sample specimen is compared with the calibration curve of the standard specimen by injecting the specimens into a GPC injector, thereby obtaining the molecular weight and the molecular weight distribution of the compound. In this case, Infinity II 1260 (manufactured by Agilent Inc.) may be used as a measuring apparatus, and the flow rate and the column temperature may be set to 1.00 mL/min and 40.0°C, respectively.

Throughout the specification of the present application, "glass transition temperature (Tg)" may be measured using a differential scanning analysis (DSC), and specifically, a specimen may be warmed at a heating rate of 5°C/min within a temperature range of -60°C to 150°C using a differential scanning calorimeter (DSC, DSC-STAR3, manufactured by Mettler Toledo Inc., and a midpoint of a DSC curve created at a point where there is a heat change amount is measured by performing two cycles of an experiment in the section, thereby obtaining glass transition temperature.

Throughout the specification of the present application, the viscosity of the compound may be a value measured by a Brookfield viscometer at a temperature of 25°C.

Throughout the specification of the present application, a substrate-free adhesive tape is an adhesive tape which does not include a substrate, and may mean an adhesive tape in a substrate-free form.

Hereinafter, the present specification will be described in more detail.

An exemplary embodiment of the present invention provides an adhesive composition including an acrylic copolymer in which a monomer mixture including: an alkyl group-containing (meth)acrylate monomer; a cyclic substituent-containing (meth)acrylate monomer including at least one of a cycloalkyl group-containing (meth)acrylate monomer and a hetero cycloalkyl group-containing (meth)acrylate monomer; a polar group-containing (meth) acrylate monomer wherein the polar functional group-containing monomer includes at least one of a carboxyl group-containing monomer, and a nitrogen-containing monomer and a (meth)acrylate monomer represented by the following Formula 1 is copolymerized.

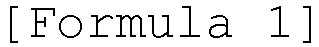

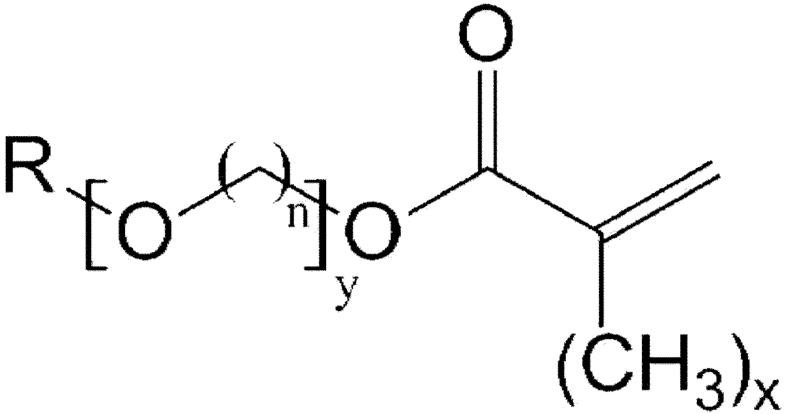

In Formula 1, R is hydrogen or a straight-chain or branched alkyl group having 1 to 5 carbon atoms, x is 0 or 1, y is an integer from 2 to 13, and n is an integer from 2 to 4.

According to an exemplary embodiment of the present invention, the adhesive composition may implement an adhesive layer having shear properties suitable for a continuous process and an excellent adhesive strength. Specifically, the adhesive composition may provide an adhesive layer having shear properties suitable for being applied to a continuous process such as a roll to cell method. In addition, the adhesive composition may provide an adhesive layer having an excellent adhesive strength even at high temperature.

According to an exemplary embodiment of the present invention, the acrylic copolymer may be formed through a copolymerization reaction among an alkyl group-containing (meth)acrylate monomer, a cyclic substituent-containing (meth)acrylate monomer, a polar group-containing (meth)acrylate monomer, and the (meth)acrylate monomer represented by Formula 1 included in the monomer mixture.

According to an exemplary embodiment of the present invention, the acrylic copolymer includes an alkyl group-containing (meth)acrylate monomer unit derived from an alkyl group-containing (meth)acrylate monomer, a cyclic substituent-containing (meth)acrylate monomer unit derived from the cyclic substituent-containing (meth)acrylate monomer, a polar group-containing (meth)acrylate monomer unit derived from the polar group-containing (meth)acrylate monomer, and a monomer unit derived from the (meth)acrylate monomer represented by Formula 1.

According to the present invention, a content of the alkyl group-containing (meth)acrylate monomer is 50 parts by weight to 75 parts by weight based on 100 parts by weight of the monomer mixture. Specifically, a content of the alkyl group-containing (meth)acrylate monomer may be 50 parts by weight to 70 parts by weight, 55 parts by weight to 70 parts by weight, 58 parts by weight to 70 parts by weight, 50 parts by weight to 62 parts by weight, 60 parts by weight to 70 parts by weight, or 62 parts by weight to 35 parts by weight based on 100 parts by weight of the monomer mixture. By adjusting the content of the alkyl group-containing (meth)acrylate monomer within the above-described range, it is possible to properly control a glass transition temperature (Tg) capable of exhibiting bulk characteristics of an adhesive layer including a cured product of the adhesive composition, to improve the wettability capable of exhibiting interfacial characteristics of the adhesive layer, and to improve the adhesion property of the adhesive layer.

In the present specification, "alkyl group" may mean including a chain-type hydrocarbon structure in which no unsaturated bond is present in a functional group.

According to an exemplary embodiment of the present invention, the alkyl group-containing (meth)acrylate monomer may include at least one of methyl (meth)acrylate, ethyl (meth)acrylate, n-propyl (meth)acrylate, isopropyl (meth)acrylate, n-butyl (meth)acrylate, t-butyl (meth)acrylate, sec-butyl (meth)acrylate, pentyl (meth)acrylate, 2-ethylhexyl (meth)acrylate, 2-ethylbutyl (meth)acrylate, n-octyl-5-(meth)acrylate, isooctyl (meth)acrylate, and 2-ethylhexyl (meth)acrylate.

According to an exemplary embodiment of the present invention, a content of the cyclic substituent-containing (meth)acrylate monomer may be 5 parts by weight to 20 parts by weight based on 100 parts by weight of the monomer mixture. Specifically, a content of the cyclic substituent-containing (meth)acrylate monomer may be 7 parts by weight to 18 parts by weight, 9 parts by weight to 15 parts by weight, or 12 parts by weight to 17 parts by weight based on 100 parts by weight of the monomer mixture. It is possible to effectively improve the adhesive strength of an adhesive layer including a cured product of the adhesive composition by adjusting the content of the cyclic substituent-containing (meth)acrylate monomer within the above-described range. Specifically, the adhesive layer may be excellent in adhesive strength to an adherend having a low surface energy.

According to the present invention, the cyclic substituent-containing (meth)acrylate monomer includes at least one of the cycloalkyl group-containing (meth)acrylate monomer and the hetero cycloalkyl group-containing (meth)acrylate monomer. Specifically, the cyclic substituent-containing (meth)acrylate monomer may at least include the hetero cycloalkyl group-containing (meth)acrylate monomer.

According to the present invention, the cyclic substituent-containing (meth)acrylate monomer includes the cycloalkyl group-containing (meth)acrylate monomer and the hetero cycloalkyl group-containing (meth)acrylate monomer, and a weight ratio of the hetero cycloalkyl group-containing (meth)acrylate monomer to the cycloalkyl group-containing (meth)acrylate monomer is 1 : 1.5 to 1 : 2.5. Specifically, the weight ratio of the hetero cycloalkyl group-containing (meth)acrylate monomer to the cycloalkyl group-containing (meth)acrylate monomer may be 1:1.7 to 1:2.3, 1:1.9 to 1:2.1, 1:1.6 to 1:1.8, or 1:2.0 to 1:2.4. When the weight ratio of the cycloalkyl group-containing (meth)acrylate monomer to the hetero cycloalkyl group-containing (meth)acrylate monomer is within the above-described range, the glass transition temperature (Tg) of an adhesive layer including a cured product of the adhesive composition may be improved, and the shear strength of the adhesive layer at high temperature may be improved.

According to an exemplary embodiment of the present invention, the hetero cycloalkyl group may include a ring structure in which an unsaturated bond is not present and a heteroatom other than carbon is included in the functional group, and may include a monocyclic ring or polycyclic ring having 2 to 20 carbon atoms.

According to an exemplary embodiment of the present invention, the hetero cycloalkyl group-containing (meth)acrylate monomer may include at least one of tetrahydrofurfuryl acrylate, tetrahydropyranyl acrylate, acryloylmorpholine, and cyclic trimethylolpropane formal acrylate.

According to an exemplary embodiment of the present invention, the cycloalkyl group may include a carbon ring structure in which an unsaturated bond is not present in the functional group, and may include a monocyclic ring or polycyclic ring having 3 to 20 carbon atoms.

According to an exemplary embodiment of the present invention, the cycloalkyl group-containing (meth)acrylate monomer may include at least one of cyclohexyl acrylate, cyclohexyl methacrylate, isobornyl acrylate, isobornyl methacrylate, 3,3,5-trimethylcyclohexyl acrylate, 3,3,5-trimethylcyclohexyl methacrylate, t-butylcyclohexyl acrylate, and t-butylcyclohexyl methacrylate.

According to the present invention, the adhesive composition includes a (meth)acrylate monomer represented by the following Formula 1 to improve a cohesion strength of an adhesive layer including a cured product of the adhesive composition, the glass transition temperature (Tg) of the adhesive layer may be appropriately controlled, and the adhesive strength of the adhesive layer to the adherend may be easily maintained. Further, the high-temperature durability of the adhesive layer may be improved.

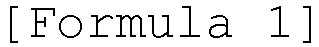

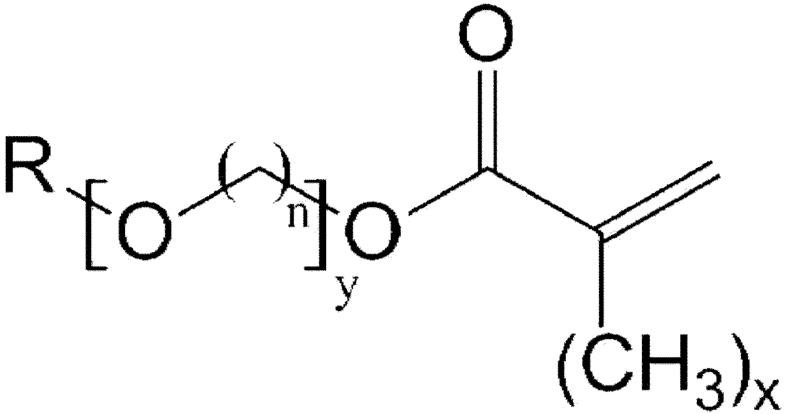

In Formula 1, R is hydrogen or a straight-chain or branched alkyl group having 1 to 5 carbon atoms, x is 0 or 1, y is an integer from 2 to 13, and n is an integer from 2 to 4.

According to an exemplary embodiment of the present invention, in Formula 1, R is hydrogen or a straight-chained or branched alkyl group having 1 to 4 carbon atoms, and y may be an integer from 2 to 11, an integer from 3 to 9, or an integer from 4 to 7. Specifically, in Formula 1, y may be an integer of 2. In addition, in Formula 1, n may be an integer from 2 to 4, and specifically, n may be an integer of 2. Furthermore, in Formula 1, R may be hydrogen or a straight-chained or branched alkyl group having 1 to 3 carbon atoms, and specifically, R may be hydrogen or an alkyl group having 1 to 2 carbon atoms.

According to an exemplary embodiment of the present invention, the adhesive composition including the compound represented by Formula 1 in which R, x, y, and n satisfy the above-described ranges may implement an adhesive layer in which cohesion strength and adhesive strength are effectively improved. Further, the adhesive composition including the compound represented by Formula 1 may implement an adhesive layer having a fracture characteristic suitable for a continuous process. Specifically, by using the compound represented by Formula 1, an acrylic copolymer having a weight average molecular weight of 800,000 g/mol to 3,000,000 g/mol is easily formed, and an excellent coatability of the adhesive composition may be secured.

According to an exemplary embodiment of the present invention, the (meth)acrylate monomer represented by Formula 1 may include at least one of 2-(2-ethoxyethoxy)ethyl acrylate (in Formula 1, R is an ethyl group, x is 0, n is 2, and y is 2), 2-(2-ethoxyethoxy)methacrylate (in Formula 1, R is an ethyl group, x is 1, n is 2, and y is 2), polypropylene glycol monoacrylate (in Formula 1, R is hydrogen, x is 0, n is 3, and y is 6; PPA6 manufactured by Bisomer), polyethylene glycol monoacrylate (in Formula 1, R is hydrogen, x is 0, n is 2, and y is 6; PEA6 manufactured by Bisomer), methoxy polyethylene glycol acrylate (in Formula 1, R is a methyl group, x is 0, n is 2, and y is 3; AM30G manufactured by Shin-Nakamura Chemical Co., Ltd.), methoxy polyethylene glycol acrylate (in Formula 1, R is a methyl group, x is 0, n is 2, and y is 4; AM-40G manufactured by Shin-Nakamura Chemical Co., Ltd.), methoxy polyethylene glycol acrylate (in Formula 1, R is a methyl group, x is 0, n is 2, and y is 9; AM-90G manufactured by Shin-Nakamura Chemical Co., Ltd.), and methoxy polyethylene glycol acrylate (in Formula 1, R is a methyl group, x is 0, n is 2, and y is 13; AM-130G manufactured by Shin-Nakamura Chemical Co., Ltd.).

According to the present invention, a content of the (meth)acrylate monomer represented by Formula 1 is 5 parts by weight to 35 parts by weight based on 100 parts by weight of the monomer mixture. Specifically, a content of the (meth)acrylate monomer represented by Formula 1 may be 6 parts by weight to 35 parts by weight, 10 parts by weight to 35 parts by weight, 10 parts by weight to 30 parts by weight, 7 parts by weight to 32 parts by weight, 15 parts by weight to 30 parts by weight, 13 parts by weight to 25 parts by weight, 15 parts by weight to 20 parts by weight, 5 parts by weight to 11 parts by weight, 14 parts by weight to 21 parts by weight, or 25 parts by weight to 30 parts by weight, based on 100 parts by weight of the monomer mixture.

According to an exemplary embodiment of the present invention, it is possible to effectively improve cohesion strength and adhesive strength of an adhesive layer including a cured product of the adhesive composition by adjusting the content of the (meth)acrylate monomer represented by Formula 1 within the above-described range. Specifically, when the content of the (meth)acrylate monomer represented by Formula 1 is within the above range, the excellent adhesive strength of an adhesive layer including a cured product of the adhesive composition may be maintained by suppressing the cohesion strength from being reduced while reducing the glass transition temperature (Tg) of the adhesive layer. In addition, it is possible to effectively improve the adhesion maintenance strength of the adhesive layer at high temperature by adjusting the content of the (meth)acrylate monomer represented by Formula 1 within the above-described range. Furthermore, the adhesive composition including the (meth)acrylate monomer represented by Formula 1 at a content within the above-described range may improve the cohesion strength of the composition itself and may implement an adhesive layer having a fracture characteristic suitable for a continuous process.

According to the present invention, a content of the polar group-containing (meth)acrylate monomer is 3 parts by weight to 7 parts by weight based on 100 parts by weight of the monomer mixture. Specifically, a content of the polar group-containing (meth)acrylate monomer may be 3.5 parts by weight to 7 parts by weight, 5 parts by weight to 7 parts by weight, or 5 parts by weight to 6 parts by weight based on 100 parts by weight of the monomer mixture. When the content of the polar group-containing (meth)acrylate monomer is within the above-described range, the adhesive composition may implement an adhesive layer having a fracture property suitable for a continuous process and an excellent adhesion maintenance strength at high temperature. In addition, by adjusting the content of the polar group-containing (meth)acrylate monomer within the above-described range, an adhesive layer having an optimal crosslinking degree may be implemented to reduce the distance of the adhesive layer at fracture, and an adhesive layer suitable for a continuous process may be provided through this.

According to the present invention, the polar functional group-containing monomer includes at least a carboxyl group-containing monomer and a nitrogen-containing monomer. When a carboxyl group-containing monomer is used as the polar functional group-containing monomer, it is possible to effectively improve the crosslinking efficiency with the alkyl group-containing (meth)acrylate monomer, the cyclic substituent-containing (meth)acrylate monomer, and the (meth)acrylate monomer represented by Formula 1 and the adhesive strength of the adhesive layer.

According to an exemplary embodiment of the present invention, the hydroxyl group-containing monomer may include at least one of 2-hydroxyethyl (meth)acrylate, 2-hydroxypropyl (meth)acrylate, 4-hydroxybutyl (meth)acrylate, 6-hydroxyhexyl (meth)acrylate, 8-hydroxyoctyl (meth)acrylate, 2-hydroxyethylene glycol (meth)acrylate, and 2-hydroxypropylene glycol (meth)acrylate.

According to an exemplary embodiment of the present invention, the carboxyl group-containing monomer may include at least one of acrylic acid, methacrylic acid, 2-(meth)acryloyloxy acetic acid, 3-(meth)acryloyloxy propyl acid, 4-(meth)acryloyloxy butyl acid, an acrylic acid dimer, itaconic acid, and maleic acid.

According to an exemplary embodiment of the present invention, the nitrogen-containing monomer may include at least one of 2-isocyanatoethyl (meth)acrylate, 3-isocyanatopropyl (meth)acrylate, and 4-isocyanatobutyl (meth)acrylate.

According to an exemplary embodiment of the present invention, a weight ratio of the (meth)acrylate monomer represented by Formula 1 to the polar group-containing (meth)acrylate monomer may be 7 : 1 to 2 : 1. Specifically, the weight ratio of the (meth)acrylate monomer represented by Formula 1 to the polar group-containing (meth)acrylate monomer may be 6 : 1 to 2 : 1, 5 : 1 to 2 : 1, 5.5 : 1 to 2.5 : 1, or 4 : 1 to 3 : 1.

When the weight ratio of the (meth)acrylate monomer represented by Formula 1 to the polar group-containing (meth)acrylate monomer is within the above-described range, it is possible to prevent the cohesion strength of the adhesive layer from being increased excessively, and the adhesive layer is easily fractured, and thus may be easily applied to a continuous process. Further, it is possible to effectively improve the adhesion maintenance strength of the adhesive layer at high temperature by adjusting the weight ratio within the above-described range.

According to an exemplary embodiment of the present invention, the acrylic copolymer may be produced using a copolymerization reaction used in the art. For example, the acrylic copolymer may be produced by subjecting the monomer mixture to thermal polymerization or photopolymerization. Specifically, the acrylic copolymer may be produced using a thermal polymerization method.

According to an exemplary embodiment of the present invention, a composition may be produced by adding a solvent to the monomer mixture, and the acrylic copolymer may be produced using the same. Further, a content of the solvent may be adjusted to 150 parts by weight to 300 parts by weight based on 100 parts by weight of the monomer mixture. It is possible to effectively suppress the viscosity of the monomer mixture during the process of producing the acrylic copolymer from being increased by adjusting the content of the solvent within the above-described range. Through this, the monomer mixture may be effectively stirred during the process of producing the acrylic copolymer, and the polymerization reaction of the acrylic copolymer may be effectively performed. Specifically, the solid content of the monomer mixture including the monomers and the solvent may be controlled to 25% to 40% by adjusting the content of the solvent within the above-described range. The polymerization reaction of the acrylic copolymer may be effectively performed by appropriately adjusting the solid content of the monomer mixture as within the above-described range.

According to an exemplary embodiment of the present invention, as the solvent, a solvent used in the art may be used without limitation, and for example, the solvent may include at least one of ethyl acetate, butyl acetate, toluene, methyl ethyl ketone, and methyl isobutyl ketone. However, the type of solvent is not limited to those described above.

According to an exemplary embodiment of the present invention, the acrylic copolymer has a weight average molecular weight of 800,000 g/mol to 3,000,000 g/mol. Specifically, the acrylic copolymer may have a weight average molecular weight of 950,000 g/mol to 2,500,000 g/mol, 1,000,000 g/mol to 2,000,000 g/mol, 1,000,000 g/mol to 1,500,000 g/mol, 1,000,000 g/mol to 1,300,000 g/mol, or 900,000 g/mol to 1,200,000 g/mol. By adjusting the weight average molecular weight of the acrylic copolymer within the above-described range, it is possible to prevent a peeling phenomenon which may occur during the processing after the adhesive layer is attached to an adherend, and the constructability of the adhesive layer at low temperature may be improved. In addition, when the weight average molecular weight of the acrylic copolymer is within the above range, the adhesive layer may prevent a bonding defect to an adherend such as a glass panel occurring due to the curing shrinkage, and the adhesive layer may have excellent durability even when a construction surface is shrunk or deformed by temperature or moisture. Furthermore, by adjusting the weight average molecular weight of the acrylic copolymer within the above-described range, the high temperature stability of the adhesive layer may be improved, and the fracture distance of the adhesive layer may be implemented to be short. Through this, it is possible to provide an adhesive layer which is easily applied to a continuous process.

According to an exemplary embodiment of the present invention, the acrylic copolymer has a glass transition temperature of -55°C to -35°C. Specifically, the acrylic copolymer may have a glass transition temperature of -50°C to -38°C, -48°C to -40°C, or -48°C to -45°C. When the glass transition temperature of the acrylic copolymer is within the above-described range, the cohesion strength of the adhesive composition may be improved. Through this, it is possible to implement an adhesive layer which is excellent in durability.

According to an exemplary embodiment of the present invention, the adhesive composition may further include a thermal curing agent. As the thermal curing agent, a thermal curing agent used in the art may be used without limitation. For example, an aziridine-based thermal curing agent may be used as the thermal curing agent. Specifically, the aziridine-based thermal curing agent may include at least one of N,N'-toluene-2,4-bis(1-aziridine carboxamide), N,N'-diphenylmethane-4,4'-bis(1-aziridine carboxamide), triethylenemelamine, bisisoprothaloyl-1-(2-methylaziridine), tri-1-aziridinyl phosphine oxide, and N,N'-bismethylene iminoisophthalamide.

According to an exemplary embodiment of the present invention, the content of the thermal curing agent may be 0.01 part by weight to 1 part by weight, specifically 0.03 part by weight to 0.5 part by weight, and more specifically 0.1 part by weight to 0.5 part by weight, based on 100 parts by weight of the solid content of the acrylic copolymer. When the content of the thermal curing agent is within the above-described range, the crosslinking density in the adhesive layer is appropriately adjusted, so that cohesion strength and heat resistance may be implemented at an appropriate level, and adhesive strength of the adhesive layer may also be improved.

In the present specification, the "solid content" may mean a solute or solid product except for a solvent in the entire solution, and specifically, the solid content of the acrylic copolymer may mean a solid content formed through a polymerization reaction among the alkyl group-containing (meth)acrylate monomer, the cyclic substituent-containing (meth)acrylate monomer, the polar group-containing (meth)acrylate monomer, and the (meth)acrylate monomer represented by Formula 1.

Another exemplary embodiment of the present invention provides a substrate-free adhesive tape including: a release film; and an adhesive layer provided on one surface of the release film and including a cured product of the adhesive composition.

The substrate-free adhesive tape according to an exemplary embodiment of the present invention has an advantage in that the substrate-free adhesive tape has shear characteristics suitable for a continuous process and the adhesive strength is excellent.

According to an exemplary embodiment of the present invention, the substrate-free adhesive tape does not include a substrate, and may be a substrate-free transfer tape.

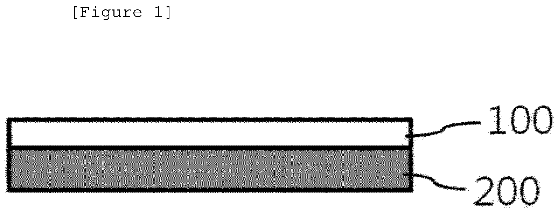

FIG. 1 illustrates a substrate-free adhesive tape according to the present invention. Specifically, FIG. 1 illustrates a substrate-free adhesive tape including a release film 200 and an adhesive layer 100 provided on one surface of the release film 200.

According to the present invention, the adhesive layer includes an acrylic copolymer in which a monomer mixture including: an alkyl group-containing (meth)acrylate monomer; a cyclic substituent-containing (meth)acrylate monomer including at least one of a cycloalkyl group-containing (meth)acrylate monomer and a hetero cycloalkyl group-containing (meth)acrylate monomer; a polar group-containing (meth)acrylate monomer wherein the polar functional group-containing monomer includes at least one of a carboxyl group-containing monomer, and a nitrogen-containing monomer; and a (meth)acrylate monomer represented by the following Formula 1 is copolymerized.

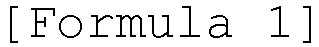

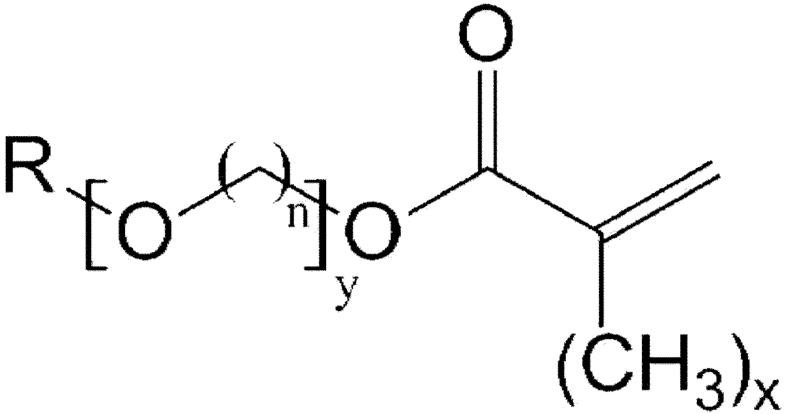

In Formula 1, R is hydrogen or a straight-chain or branched alkyl group having 1 to 5 carbon atoms, x is 0 or 1, y is an integer from 2 to 13, and n is an integer from 2 **to 4.**

According to an exemplary embodiment of the present invention, the release film may be a release film which is removed when the substrate-free adhesive tape is used. Specifically, the release film may be a release film which protects the adhesive layer before the substrate-free adhesive tape is attached to a final product, and may be a release film removed in order to attach the adhesive layer to a final product.

According to an exemplary embodiment of the present invention, the release film may have a thickness of 10 µm to 80 µm, or 25 µm to 75 µm. By adjusting the thickness of the release film within the above-described range, it is possible to prevent the release film from being torn when the release film is peeled off from the adhesive layer. Through this, it is possible to suppress the peeling efficiency from deteriorating.

According to an exemplary embodiment of the present invention, the adhesive layer may have a thickness of 10 µm to 80 µm. Specifically, the adhesive layer may have a thickness of 20 µm to 80 µm, 20 µm to 70 µm, or 30 µm to 70 µm. By adjusting the thickness of the adhesive layer within the above-described range, it is possible to provide a substrate-free adhesive tape in which the natural fracture and the release stability are implemented during a continuous process.

According to an exemplary embodiment of the present invention, the fracture distance of the adhesive layer may be 40 mm or less when the adhesive layer is attached to an adherend, and then the adhesive layer is stretched at an angle of 90 degrees and a velocity of 2.4 m/min. Specifically, the fracture distance of the adhesive layer may be 35 mm or less or 30 mm or less.

Since the adhesive layer of the substrate-free adhesive tape according to an exemplary embodiment of the present invention has a short fracture distance as described above, it is possible to minimize a phenomenon in which the adhesive layer is extended without being fractured when tensile force is applied thereto. When a continuous process is performed without a separate stamping process using the characteristics as described above to induce the fracture of the adhesive layer through stretching without a separate stamping process, a phenomenon in which the adhesive layer is shrunk while being fractured is minimized, so that there is an advantage in that the continuous process may be stably performed. The substrate-free adhesive tape may be applied to a continuous process such as a roll to cell method.

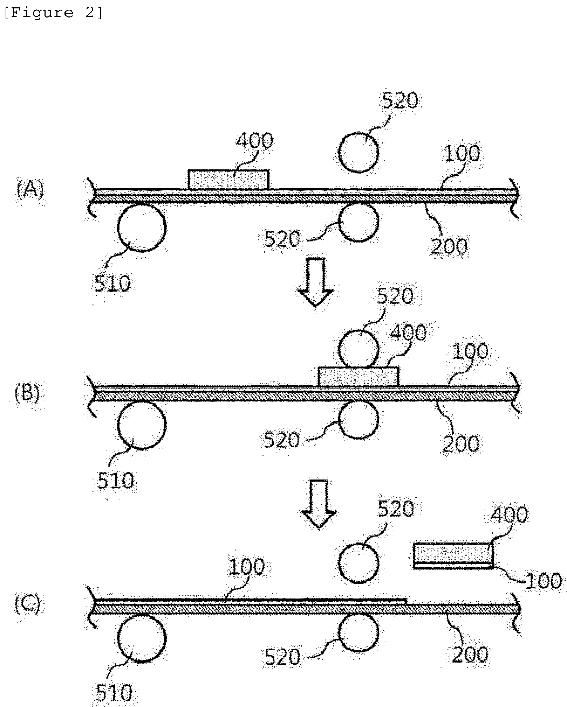

FIG. 2 schematically illustrates a roll to cell continuous process using a substrate-free adhesive tape according to an exemplary embodiment of the present invention. Specifically, FIG. 2(A) illustrates a step in which a substrate-free adhesive tape is transported using a feed roll 510 and a cell 400 is positioned on an adhesive layer 100 of the substrate-free adhesive tape to be fed. Further, FIG. 2(B) illustrates that a cell 400 is laminated on an adhesive layer 100 of a substrate-free adhesive tape using two laminating rolls 520, and FIG. 2(C) illustrates that an adhesive layer 100 is provided on the lower surface of a cell 400 by pulling a substrate-free adhesive tape in which the cell 400 is laminated without a separate stamping process.

According to an exemplary embodiment of the present invention, the fracture distance of the adhesive layer may mean an extended length of the adhesive layer when the adhesive layer is fractured by attaching the adhesive layer to an adherend, and then stretching a substrate-free transfer tape which is not attached to the adherend at an angle of 90 degrees and a velocity of 2.4 m/min.

Furthermore, various substrates such as polyethylene terephthalate (PET), acrylonitrile-butadiene-styrene (ABS), and polycarbonate (PC) may be used as an adherend in order to measure the fracture distance of the adhesive layer.

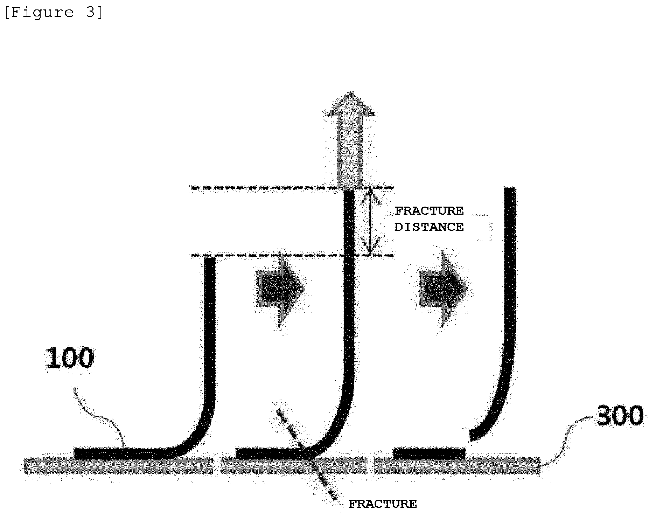

FIG. 3 illustrates a process of measuring the fracture distance of an adhesive layer of a substrate-free transfer tape according to an exemplary embodiment of the present invention. Specifically, FIG. 3 illustrates a method of measuring the fracture distance of an adhesive layer when an adhesive layer 100 is fractured by attaching the adhesive layer 100 to an adherend 300, and then applying tensile force to the adhesive layer 100. In FIG. 3, a release film is omitted.

According to an exemplary embodiment of the present invention, the adhesive layer may have a shear strength of 7 kgf/in² (106.402 kPa) to 12 kgf/in² (182.404 kPa) at 85°C. Specifically, the adhesive layer may have a shear strength of 7 kgf/in² (106.402 kPa) to 11.5 kgf/in² (174.8039 kPa) 7.5 kgf/in² (114.003 kPa) to 11 kgf/in² (167.204 kPa), or 8.5 kgf/in² (129.203 kPa) to 10 kgf/in² (152.003 kPa) at 85°C.

According to an exemplary embodiment of the present invention, the adhesive layer of the substrate-free adhesive tape has an excellent high-temperature shear strength, and thus is attached to a final product, so that there is an advantage in that the high-temperature reliability is excellent.

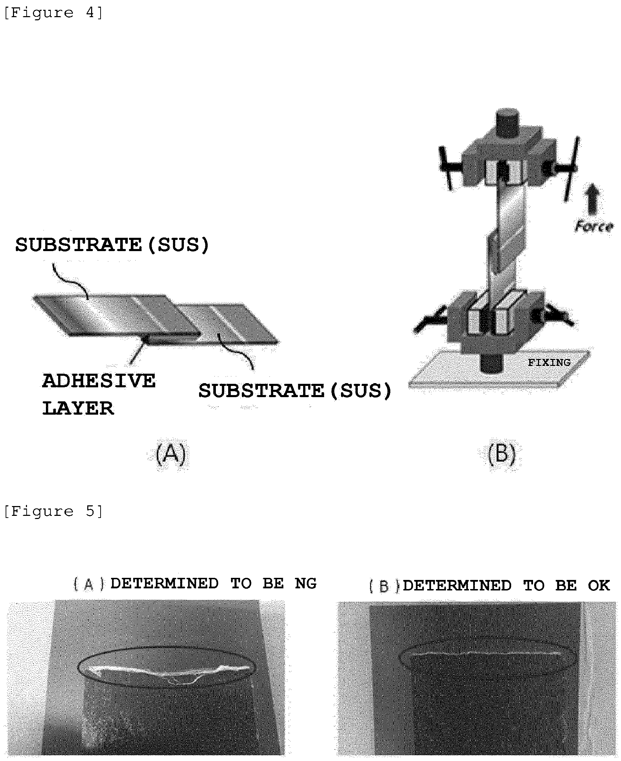

FIG. 4 illustrates a method of measuring the high-temperature shear strength of an adhesive layer of a substrate-free adhesive tape according to an exemplary embodiment of the present invention. FIG. 4 illustrates the measurement of the shear strength of an adhesive layer in accordance with ASTM D1002, FIG. 4(A) illustrates a test specimen prepared in order to measure the shear strength of the adhesive layer, and FIG. 4(B) illustrates the measurement of the shear strength of an adhesive layer in accordance with ASTM D1002. More specifically, a sample is produced by cutting a substrate-free adhesive tape including a release film and an adhesive layer into a size of 25 mm X 25 mm, and two substrates (stainless steel, SUS) of which the surfaces are thoroughly washed twice with ethyl acetate were prepared. Thereafter, the entire region of the adhesive layer of the sample is attached to the one substrate, the entire region of the exposed adhesive layer is attached to the other substrate by removing the release film from the sample, and a 2-kg rubber roller is reciprocated three times, thereby completing the attachment. Thereafter, the sample attached to the substrate is pressurized with a force of 3 kg in a constant temperature chamber at 80°C for 30 minutes, and then a test specimen for measuring the high-temperature shear strength of an adhesive layer is produced by aging the sample at room temperature for 1 hour. Thereafter, the test specimen is stored in a constant temperature chamber at 85°C for 1 hour, and then a force with which the adhesive layer is fractured is measured by repeating a process in which one substrate is fixed and the other substrate is transported at a velocity of 6 mm/min five times, and a high-temperature shear strength of the adhesive is obtained by calculating an average value of the measured force.

### [Mode for Invention]

Hereinafter, the present invention will be described in detail with reference to Examples for specifically describing the present invention. However, the Examples according to the present invention may be modified in various forms, and it is not interpreted that the scope of the present invention is limited to the Examples to be described below. The Examples of the present specification are provided for more completely explaining the present invention to the person with ordinary skill in the art.

### Production of Adhesive Composition

### Example 1

A monomer mixture including 60 parts by weight of 2-ethylhexylacrylae (manufactured by LG Chem.), 10 parts by weight of isobornyl acrylate (manufactured by Solvay), 5 parts by weight of tetrahydrofurfuryl acrylate (M150, manufactured by Miwon Specialty Chemical Co., Ltd.), 20 parts by weight of 2-(2-ethoxyethoxy)ethyl acrylate (M170, manufactured by Miwon Specialty Chemical Co., Ltd.), and 5 parts by weight of acrylic acid (manufactured by LG Chem.) was introduced into a 2 L five-necked reactor. Thereafter, 225.8 parts by weight of ethyl acetate were introduced into 100 parts by weight of the monomer mixture, the atmosphere was purged with nitrogen at room temperature for 1 hour or more, and the temperature was increased to 65°C, and then maintained. Thereafter, an azo-based thermal initiator 2,2'-azo-bis-isobutyrylnitrile (AIBN) was each introduced at 350 ppm per hour four times (total 1,400 ppm), the nitrogen atmosphere was maintained until the conversion rate became 95% or more, and an acrylic copolymer was produced. The produced acrylic copolymer had a weight average molecular weight of about 1,100,000 and a glass transition temperature (Tg) of -45.9°C, and the solid content and viscosity of the acrylic copolymer were 30.7% and 3,671 cPs at 25°C using 63 No. spindle.

Thereafter, an adhesive composition having a solid content of about 21% was produced by adding 0.01 part by weight of a thermal curing agent N,N'-toluene-2,4-bis(1-aziridine carboxamide) (manufactured by LG Chem.) to 100 parts by weight of the solid content of the acrylic copolymer, and adding methyl ethyl ketone thereto.

### Examples 2 to 15

Adhesive compositions were produced in the same manner as in Example 1, except that monomer mixtures were prepared as shown in the following Table 1. The measured physical properties of the produced adhesive compositions are shown in the following Table 2.

In the following Table 1, a first monomer, a second monomer, a third monomer, and a fourth monomer mean the alkyl group-containing (meth)acrylate monomer, the cyclic substituent-containing (meth)acrylate monomer, the (meth)acrylate monomer represented by Formula 1, and the polar group-containing (meth)acrylate monomer, respectively.

Further, in the following Table 1, 2EHA, BA, IBOA, IBOMA, CHMA, TMCHA, THFA, THFMA, EOEOEA, and AA mean 2-ethylhexyl acrylate (manufactured by LG Chem.), butyl acrylate (manufactured by LG Chem.), isobornyl acrylate (manufactured by Solvay), isobornyl methacrylate (manufactured by Solvay), cyclohexyl methacrylate (manufactured by Asahi Kasei Corporation), trimethylcyclohexyl acrylate (manufactured by Miwon Specialty Chemical Co., Ltd.), tetrahydrofurfuryl acrylate (M150, manufactured by Miwon Specialty Chemical Co., Ltd.), tetrahydrofurfuryl methacrylate (M151, manufactured by Miwon Specialty Chemical Co., Ltd.), 2-(2-ethoxyethoxy)ethyl acrylate (M170, manufactured by Miwon Specialty Chemical Co., Ltd.), and acrylic acid (manufactured by LG Chem.), respectively. Further, the unit of the content of monomers in the following Table 1 is part by weight.

**[Table 1]**

| | First monomer | | Second monomer | | | | | | Third monomer | Fourth monomer |
|---|---|---|---|---|---|---|---|---|---|---|
| | 2EHA | BA | Cycloalkyl group-containing | | | | Hetero cycloalkyl group-containing | | EOEOEA | AA |
| | | | IBOA | IBOMA | CHMA | TMCHA | THFA | THFMA | | |
| Example 1 | 60 | - | 10 | - | - | - | 5 | - | 20 | 5 |
| Example 2 | 60 | - | | 10 | - | - | 5 | - | 20 | 5 |
| Example 3 | 60 | - | | - | 10 | - | 5 | - | 20 | 5 |
| Example 4 | 60 | - | | - | - | 10 | 5 | - | 20 | 5 |
| Example 5 | - | 60 | 10 | - | - | - | 5 | - | 20 | 5 |
| Example 6 | - | 60 | | 10 | - | - | 5 | - | 20 | 5 |
| Example 7 | - | 60 | | - | 10 | - | 5 | - | 20 | 5 |
| Example 8 | - | 60 | | - | - | 10 | 5 | - | 20 | 5 |
| Example 9 | 60 | - | 10 | - | - | - | | 5 | 20 | 5 |
| Example 10 | 65 | - | 10 | - | - | - | 5 | - | 15 | 5 |
| Example 11 | 70 | - | 10 | - | - | - | 5 | - | 10 | 5 |
| Example 12 | 55 | - | 10 | - | - | - | 5 | - | 25 | 5 |
| Example 13 | 50 | - | 10 | - | - | - | 5 | - | 30 | 5 |
| Example 14 | 62 | - | 10 | - | - | - | 5 | - | 20 | 3 |
| Example 15 | 58 | - | 10 | - | - | - | 5 | - | 20 | 7 |

In the following Table 2, Tg and Mw mean a glass transition temperature of the acrylic copolymer and a weight average molecular weight of the acrylic copolymer, respectively, and the viscosity and solid content are measured values of the polymerized solvent-type acrylic copolymer.

**[Table 2]**

| | Tg (°C) | Mw (g/mol) | Viscosity (cPs) | Solid content (%) |
|---|---|---|---|---|
| Example 1 | - 45.9 | 1,100,000 | 3, 671 | 30.7 |
| Example 2 | - 45.4 | 1,140,000 | 3,790 | 30.2 |
| Example 3 | - 47.15 | 1,180,000 | 3, 910 | 29.5 |
| Example 4 | - 48.24 | 1,030,000 | 3,421 | 29.9 |
| Example 5 | - 38.95 | 1,210,000 | 4,310 | 30.2 |
| Example 6 | - 38.33 | 1,170,000 | 4, 190 | 29.9 |
| Example 7 | - 40.18 | 1,040,000 | 3,900 | 30.7 |
| Example 8 | - 41.34 | 1,050,000 | 3, 901 | 31.7 |
| Example 9 | - 44.2 | 1,120,000 | 3,800 | 30.7 |
| Example 10 | - 46.51 | 1,140,000 | 3,590 | 29.8 |
| Example 11 | - 47.02 | 1,090,000 | 3,210 | 29.8 |
| Example 12 | - 48.24 | 1,030,000 | 3,421 | 29.2 |
| Example 13 | - 38.95 | 1,210,000 | 4,310 | 30.2 |
| Example 14 | - 38.33 | 990, 000 | 3, 190 | 29.9 |
| Example 15 | - 40.18 | 1,110,000 | 4,200 | 30.5 |

### Comparative Examples 1 to 4

Adhesive compositions were produced in the same manner as in Example 1, except that monomer mixtures were prepared as shown in the following Table 3. The measured physical properties of the produced adhesive compositions are shown in the following Table 4.

### Comparative Example 5

A monomer mixture including 60 parts by weight of 2-ethylhexylacrylae (manufactured by LG Chem.), 10 parts by weight of isobornyl acrylate (manufactured by Solvay), 5 parts by weight of tetrahydrofurfuryl acrylate (M150, manufactured by Miwon Specialty Chemical Co., Ltd.), 20 parts by weight of 2-(2-ethoxyethoxy)ethyl acrylate (M170, manufactured by Miwon Specialty Chemical Co., Ltd.), and 5 parts by weight of acrylic acid (manufactured by LG Chem.) was introduced into a 2 L five-necked reactor. Thereafter, 300 parts by weight of ethyl acetate and 0.05 part by weight of a molecular weight adjuster 1-dodecanethiol were introduced into 100 parts by weight of the monomer mixture, the atmosphere was purged with nitrogen at room temperature for 1 hour or more, and the temperature was increased to 65°C, and then maintained. Thereafter, an azo-based thermal initiator 2,2'-azo-bis-isobutyrylnitrile (AIBN) was each introduced at 350 ppm per hour four times (total 1,400 ppm), the nitrogen atmosphere was maintained until the conversion rate became 95% or more, and an acrylic copolymer was prepared. The produced acrylic copolymer had a weight average molecular weight of about 520,000 and a glass transition temperature (Tg) of -45.9°C, and the solid content and viscosity of the acrylic copolymer were 24.1 % and 7,200 cPs at 25°C using 63 No. spindle.

Thereafter, an adhesive composition having a solid content of about 21% was produced by adding 0.01 part by weight of a thermal curing agent N,N'-toluene-2,4-bis(1-aziridine carboxamide) (manufactured by LG Chem.) to 100 parts by weight of the solid content of the acrylic copolymer, and adding methyl ethyl ketone thereto.

### Comparative Examples 6 to 9

Adhesive compositions were produced in the same manner as in Comparative Example 5, except that monomer mixtures were prepared as shown in the following Table 3. The measured physical properties of the produced adhesive compositions are shown in the following Table 4.

In the following Table 3, a first monomer, a second monomer, a third monomer, and a fourth monomer mean the alkyl group-containing (meth)acrylate monomer, the cyclic substituent-containing (meth)acrylate monomer, the (meth)acrylate monomer represented by Formula 1, and the polar group-containing (meth)acrylate monomer, respectively. Further, in the following Table 3, 2EHA, IBOA, THFA, EOEOEA, and AA mean 2-ethylhexyl acrylate (manufactured by LG Chem.), isobornyl acrylate (manufactured by Solvay), tetrahydrofurfuryl acrylate (M150, manufactured by Miwon Specialty Chemical Co., Ltd.), 2-(2-ethoxyethoxy)ethyl acrylate (M170, manufactured by Miwon Specialty Chemical Co., Ltd.), and acrylic acid (manufactured by LG Chem.), respectively. Further, the unit of the content of monomers in the following Table 3 is part by weight.

**[Table 3]**

| | First monomer | Second monomer | | Third monomer | Fourth monomer |
|---|---|---|---|---|---|
| | 2EHA | IBOA | THFA | EOEOEA | AA |
| Comparative Example 1 | 60 | 10 | - | 20 | 10 |
| Comparative Example 2 | 60 | 10 | 5 | 15 | 10 |
| Comparative Example 3 | 80 | 10 | 5 | - | 5 |
| Comparative Example 4 | 75 | 10 | 5 | - | 10 |
| Comparative Example 5 | 60 | 10 | 5 | 20 | 5 |
| Comparative Example 6 | 70 | 10 | 5 | 10 | 5 |
| Comparative Example 7 | 50 | 10 | 5 | 30 | 5 |
| Comparative Example 8 | 62 | 10 | 5 | 20 | 3 |
| Comparative Example 9 | 58 | 10 | 5 | 20 | 7 |

In the following Table 4, Tg and Mw mean a glass transition temperature of the acrylic copolymer and a weight average molecular weight of the acrylic copolymer, respectively, and the viscosity and solid content are measured values of the polymerized solvent-type acrylic copolymer.

**[Table 4]**

| | Tg (°C) | Mw (g/mol) | Viscosity (cPs) | Solid content (%) |
|---|---|---|---|---|
| Comparative Example 1 | - 42.87 | 1,420,000 | 6,900 | 23.9 |
| Comparative Example 2 | - 40.80 | 1,300,000 | 7,200 | 24.1 |
| Comparative Example 3 | - 48.03 | 1,030,000 | 3,100 | 24.2 |
| Comparative Example 4 | - 42.40 | 1,110,000 | 4, 900 | 24.0 |
| Comparative Example 5 | - 45.90 | 520,000 | 1,410 | 24.2 |
| Comparative Example 6 | - 47.02 | 600, 000 | 1,220 | 24.4 |
| Comparative Example 7 | - 38.95 | 690, 000 | 2,310 | 23.8 |
| Comparative Example 8 | - 38.33 | 480, 000 | 1,190 | 24.1 |
| Comparative Example 9 | - 40.18 | 700,000 | 2, 930 | 23.9 |

### Production of Substrate-Free Adhesive Tape

Each of the adhesive compositions produced in Examples 1 to 15 and Comparative Examples 1 to 9 of the present invention was applied on a PET film release-treated with silicone and dried in an oven at 100°C for 3 minutes, thereby forming an adhesive layer having a thickness of 50 µm on the PET film. Thereafter, a substrate-free adhesive tape was produced by aging the adhesive layer in an oven at 50°C for 48 hours.

### [Experimental Examples]

### Measurement of Fracture distance of Adhesive Layer

In order to measure the fracture distances of the adhesive layers the substrate-free adhesive tapes produced in Examples 1 to 15 and Comparative Examples 1 to 9, an experiment was performed as described below.

After about 70 mm of one end surface of the adhesive layer of the produced substrate-free adhesive tape was attached to a PET substrate, the fracture distance of the adhesive layer was measured five times when the substrate-free adhesive tape was stretched at an angle of 90 degrees and a velocity of 2.4 m/min with respect to the PET substrate using a texture analyzer (TA) apparatus (model: TA.XTplus, manufacturer: Stable Microsystems), and the average value thereof was obtained. The results are shown in the following Table 5.

### Evaluation of Fracture surface Quality of Adhesive Layer

By observing the fracture surface of the adhesive layer fractured through the measurement experiment of the fracture distance of the adhesive layer, a case where the adhesive layer on the fracture surface was rolled up was evaluated as NG, and a case where the adhesive layer on the fracture surface was not rolled up was evaluated as OK.

FIG. 5 is a view illustrating quality evaluation criteria of a fracture surface of an adhesive layer according to an exemplary embodiment of the present invention. Specifically, FIG. 5(A) captures the case where the adhesive layer is rolled up on the fracture surface of the adhesive layer, and FIG. 5(B) captures the case where the adhesive layer is not rolled up on the fracture surface of the adhesive layer.

### Measurement of High-Temperature Shear Strength of Adhesive Layer

In order to measure the high-temperature adhesion maintenance strengths of the adhesive layers of the substrate-free adhesive tapes produced in Examples 1 to 15 and Comparative Examples 1 to 9, the shear strengths of the adhesive layers were measured in accordance with ASTM D1002 as described above. (1kgf/in² = 15.2003 KPa)

**[Table 5]**

| | High-temperature shear strength (@ 85°C) (kgf/in²) | Fracture distance (mm) | Fracture surface quality |
|---|---|---|---|
| Example 1 | 9.9 | 28 | OK |
| Example 2 | 10.2 | 23 | OK |
| Example 3 | 8.9 | 31 | OK |
| Example 4 | 9.5 | 22 | OK |
| Example 5 | 9.2 | 27 | OK |
| Example 6 | 9.8 | 33 | OK |
| Example 7 | 8.1 | 32 | OK |
| Example 8 | 7.9 | 36 | OK |
| Example 9 | 8.3 | 27 | OK |
| Example 10 | 7.6 | 35 | OK |
| Example 11 | 7.2 | 39 | OK |
| Example 12 | 9.8 | 33 | OK |
| Example 13 | 10.9 | 24 | OK |
| Example 14 | 7.9 | 29 | OK |
| Example 15 | 11.1 | 34 | OK |
| Comparative Example 1 | 10.9 | 155 | NG |
| Comparative Example 2 | 7.1 | 166 | NG |
| Comparative Example 3 | 2.9 | 130 | NG |
| Comparative Example 4 | 5.9 | 210 | NG |
| Comparative Example 5 | 4.1 | 79 | NG |
| Comparative Example 6 | 4.4 | 110 | NG |
| Comparative Example 7 | 4.9 | 61 | NG |
| Comparative Example 8 | 3.1 | 80 | NG |
| Comparative Example 9 | 5.9 | 120 | NG |

Referring to Table 5, it was confirmed that the fracture distances of the substrate-free adhesive tapes produced in Examples 1 to 15 were 40 mm or less, and were much shorter than the fracture distances of the substrate-free adhesive tapes produced in Comparative Examples 1 to 9. Further, it was confirmed that the qualities of the fracture surfaces of the substrate-free adhesive tapes produced in Examples 1 to 15 were better than the qualities of the fracture surfaces of the substrate-free adhesive tapes produced in Comparative Examples 1 to 9. In addition, it was confirmed that the high-temperature shear strength of each of the substrate-free adhesive tapes produced in Examples 1 to 15 was excellent. On the contrary, it was confirmed that in the adhesive layers of the substrate-free adhesive tapes in Comparative Examples 1 and 2 in which the content of the polar group-containing (meth)acrylate monomer in the monomer mixture was more than 7 parts by weight, the fracture distances were long and the qualities of the fracture surfaces were inferior. In addition, it was confirmed that in the adhesive layers of the substrate-free adhesive tapes produced in Comparative Examples 5 to 9 in which the acrylate-based copolymer had a low weight average molecular weight, the high-temperature shear strengths were inferior and the fracture distances were long. Furthermore, it was confirmed that in the adhesive layer of the substrate-free adhesive tapes produced in Comparative Examples 3 and 4 in which the (meth)acrylate monomer represented by Formula 1 was not included, the fracture distances were long, the qualities of the fracture surfaces were inferior, and the high-temperature shear strengths were somewhat inferior.

Therefore, it can be seen that the adhesive composition according to an exemplary embodiment of the present invention may implement an adhesive layer having an excellent high-temperature shear strength, a short fracture distance, and an excellent quality of the fracture surface. Through this, it can be seen that the substrate-free adhesive tape including the adhesive layer is suitable for use in a continuous process.

### [Explanation of Reference Numerals and Symbols]

- 100:: Adhesive layer
- 200:: Release film
- 300:: Adherend
- 400:: Cell
- 510:: Feed roll
- 520:: Laminating roll

## Claims

1. An adhesive composition comprising an acrylic copolymer in which a monomer mixture including:
an alkyl group-containing (meth)acrylate monomer;
a cyclic substituent-containing (meth)acrylate monomer including at least one of a cycloalkyl group-containing (meth)acrylate monomer and a heterocycloalkyl group-containing (meth)acrylate monomer;
a polar group-containing (meth)acrylate monomer; and
a (meth)acrylate monomer represented by the following Formula 1 is copolymerized: 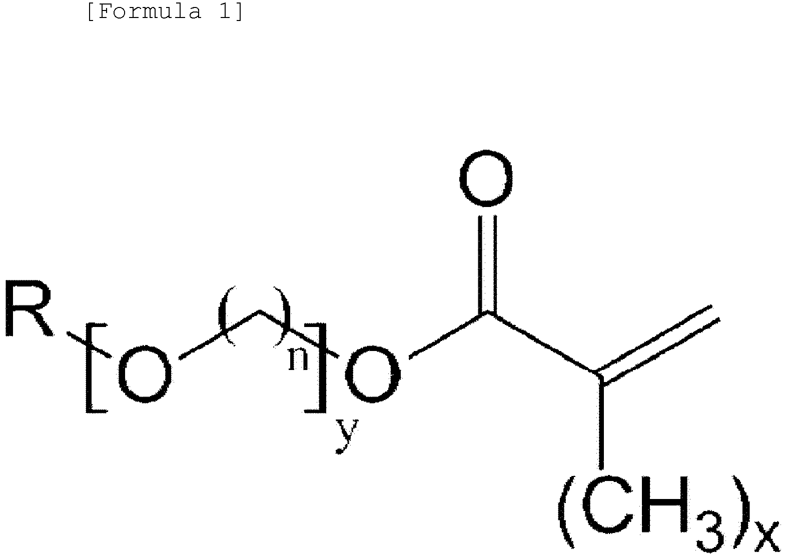 in Formula 1, R is hydrogen or a straight-chain or branched alkyl group having 1 to 5 carbon atoms, x is 0 or 1, y is an integer from 2 to 13, and n is an integer from 2 to 4;
wherein the acrylic copolymer has a weight average molecular weight of 800,000 g/mol or more and 3,000,000 g/mol or less;
wherein the polar functional group-containing monomer includes at least one of a carboxyl group-containing monomer, and a nitrogen-containing monomer;
wherein a content of the polar group-containing (meth)acrylate monomer is 3 parts by weight or more and 7 parts by weight or less based on 100 parts by weight of the monomer mixture
wherein the average molecular weight is measured according to the method of the description;
wherein the acrylic copolymer has a glass transition temperature of -55°C or more and -35°C or less;
the glass transition temperature is measured according to the method of the description and
wherein the cyclic substituent-containing (meth)acrylate monomer comprises the cycloalkyl group-containing (meth)acrylate monomer and the heterocycloalkyl group-containing (meth)acrylate monomer, and
a weight ratio of the heterocycloalkyl group-containing (meth)acrylate monomer to the cycloalkyl group-containing (meth)acrylate monomer is 1 : 1.5 to 1 : 2.5;
wherein a content of the (meth)acrylate monomer represented by Formula 1 is 5 parts by weight or more and 35 parts by weight or less based on 100 parts by weight of the monomer mixture and
wherein a content of the alkyl group-containing (meth)acrylate monomer is 50 parts by weight or more and 75 parts by weight or less based on 100 parts by weight of the monomer mixture..

2. The adhesive composition of claim 1, wherein a weight ratio of the (meth)acrylate monomer represented by Formula 1 to the polar group-containing (meth)acrylate monomer is 7 : 1 to 2 : 1.

3. The adhesive composition of claim 1, wherein a content of the cyclic substituent-containing (meth)acrylate monomer is 5 parts by weight or more and 20 parts by weight or less based on 100 parts by weight of the monomer mixture.

4. A substrate-free adhesive tape comprising:
a release film; and
an adhesive layer provided on one surface of the release film and comprising a cured product of the adhesive composition according to claim 1.

5. The substrate-free adhesive tape of claim 4, wherein a fracture distance of the adhesive layer is 40 mm or less when the adhesive layer is attached to an adherend, and then the adhesive layer is stretched at an angle of 90 degrees and a velocity of 2.4 m/min.

6. The substrate-free adhesive tape of claim 4, wherein the adhesive layer has a shear strength of 106.402 kPa (7 kgf/in²) or more and 182.404 kPa (12 kgf/in²) or less at 85°C;
wherein the shear strength is measured according to the method of the description.

7. The substrate-free adhesive tape of claim 4, wherein the adhesive layer has a thickness of 10 µm or more to 80 µm or less.

## Patentansprüche

1. Klebezusammensetzung, umfassend ein Acrylcopolymer, in dem eine Monomermischung, umfassend:
ein Alkylgruppen-haltiges (Meth)acrylatmonomer;
ein cyclische Substituenten-haltiges (Meth)acrylatmonomer, umfassend mindestens eines aus einem Cycloalkylgruppen-haltigen (Meth)acrylatmonomer und einem Heterocycloalkylgruppen-haltigen (Meth)acrylatmonomer;
ein polare Gruppen-haltiges (Meth)acrylatmonomer; und
ein (Meth)acrylatmonomer, das durch die folgende Formel 1 dargestellt wird, copolymerisiert ist: 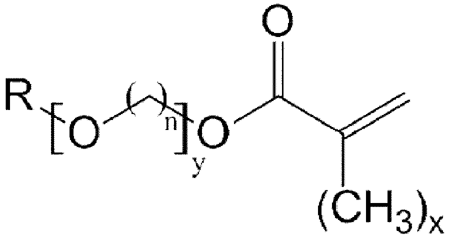
wobei in Formel 1 R Wasserstoff oder eine geradkettige oder verzweigte Alkylgruppe mit 1 bis 5 Kohlenstoffatomen ist, x 0 oder 1 ist, y eine ganze Zahl von 2 bis 13 ist und n eine ganze Zahl von 2 bis 4 ist;
wobei das Acrylcopolymer ein gewichtsmittleres Molekulargewicht von 800.000 g/mol oder mehr und 3.000.000 g/mol oder weniger aufweist;
wobei das polare funktionelle Gruppen-haltige Monomer mindestens eines aus einem Carboxylgruppen-haltigen Monomer und einem Stickstoff-haltigem Monomer umfasst;
wobei ein Gehalt des polare Gruppen-haltigen (Meth)acrylatmonomers 3 Gewichtsteile oder mehr und 7 Gewichtsteile oder weniger, bezogen auf 100 Gewichtsteile der Monomermischung, beträgt
wobei das mittlere Molekulargewicht gemäß dem Verfahren der Beschreibung gemessen wird;
wobei das Acrylcopolymer eine Glasübergangstemperatur von -55 °C oder mehr und -35 °C oder weniger aufweist;
die Glasübergangstemperatur gemäß dem Verfahren der Beschreibung gemessen wird und
wobei das cyclische Substituenten-haltige (Meth)acrylatmonomer das Cycloalkylgruppen-haltige (Meth)acrylatmonomer und das Heterocycloalkylgruppenhaltige (Meth)acrylatmonomer umfasst, und
ein Gewichtsverhältnis des Heterocycloalkylgruppen-haltigen (Meth)acrylatmonomers zu dem Cycloalkylgruppen-haltigen (Meth)acrylatmonomer 1:1,5 bis 1:2,5 beträgt;
wobei ein Gehalt des durch Formel 1 dargestellten (Meth)acrylatmonomers 5 Gewichtsteile oder mehr und 35 Gewichtsteile oder weniger, bezogen auf 100 Gewichtsteile der Monomermischung, beträgt und
wobei ein Gehalt des Alkylgruppen-haltigen (Meth)acrylatmonomers 50 Gewichtsteile oder mehr und 75 Gewichtsteile oder weniger, bezogen auf 100 Gewichtsteile der Monomermischung, beträgt.

2. Klebezusammensetzung nach Anspruch 1, wobei ein Gewichtsverhältnis des durch Formel 1 dargestellten (Meth)acrylatmonomers zu dem polare Gruppen-haltigen (Meth)acrylatmonomer 7:1 bis 2:1 beträgt.

3. Klebezusammensetzung nach Anspruch 1, wobei ein Gehalt des cyclische Substituenten-haltigen (Meth)acrylatmonomers 5 Gewichtsteile oder mehr und 20 Gewichtsteile oder weniger, bezogen auf 100 Gewichtsteile der Monomermischung, beträgt.

4. Substratfreies Klebeband, umfassend:
eine Trennfolie; und
eine Klebeschicht, die auf einer Oberfläche der Trennfolie bereitgestellt ist und ein gehärtetes Produkt der Klebezusammensetzung nach Anspruch 1 umfasst.

5. Substratfreies Klebeband nach Anspruch 4, wobei ein Bruchabstand der Klebeschicht 40 mm oder weniger beträgt, wenn die Klebeschicht an einer Klebefläche befestigt wird und die Klebeschicht dann in einem Winkel von 90 Grad und mit einer Geschwindigkeit von 2,4 m/min gedehnt wird.

6. Substratfreies Klebeband nach Anspruch 4, wobei die Klebeschicht eine Scherfestigkeit von 106,402 kPa (7 kgf/in²) oder mehr und 182,404 kPa (12 kgf/in²) oder weniger bei 85 °C aufweist;
wobei die Scherfestigkeit gemäß dem Verfahren der Beschreibung gemessen wird.

7. Substratfreies Klebeband nach Anspruch 4, wobei die Klebeschicht eine Dicke von 10 µm oder mehr bis 80 µm oder weniger aufweist.

## Revendications

1. Composition adhésive comprenant un copolymère acrylique dans laquelle un mélange de monomères comportant :
un monomère (méth)acrylate contenant un groupe alkyle ;
un monomère (méth)acrylate contenant un substituant cyclique comportant au moins un parmi un monomère (méth)acrylate contenant un groupe cycloalkyle et un monomère (méth)acrylate contenant un groupe hétérocycloalkyle ;
un monomère (méth)acrylate contenant un groupe polaire ; et un monomère (méth)acrylate représenté par la Formule 1 suivante est copolymérisé : 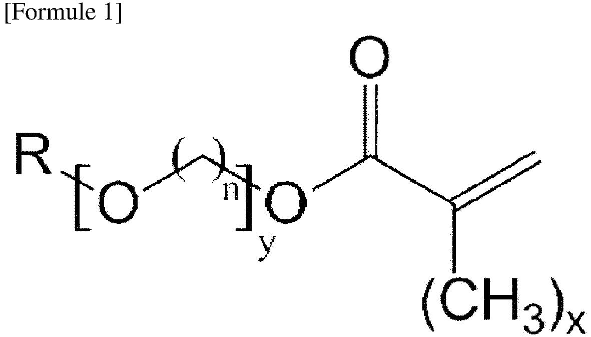
dans la Formule 1, R est hydrogène ou un groupe alkyle à chaîne linéaire ou ramifié ayant 1 à 5 atomes de carbone, x vaut 0 ou 1, y est un nombre entier de 2 à 13, et n est un nombre entier de 2 à 4 ;
dans laquelle le copolymère acrylique possède un poids moléculaire moyen en poids de 800 000 g/mol ou plus et de 3 000 000 g/mol ou moins ;
dans laquelle le monomère contenant un groupe fonctionnel polaire comporte au moins un parmi un monomère contenant un groupe carboxyle, et un monomère contenant de l'azote ;
dans laquelle une teneur du monomère (méth)acrylate contenant un groupe polaire est de 3 parties en poids ou plus et de 7 parties en poids ou moins sur la base de 100 parties en poids du mélange de monomères
dans laquelle le poids moléculaire moyen est mesuré selon le procédé de la description ; dans laquelle le copolymère acrylique possède une température de transition vitreuse de -55 °C ou plus et de -35 °C ou moins ;
la température de transition vitreuse est mesurée selon le procédé de la description et dans laquelle le monomère (méth)acrylate contenant un substituant cyclique comprend le monomère (méth)acrylate contenant un groupe cycloalkyle et le monomère (méth)acrylate contenant un groupe hétérocycloalkyle, et
un rapport en poids du monomère (méth)acrylate contenant un groupe hétérocycloalkyle sur le monomère (méth)acrylate contenant un groupe cycloalkyle est de 1 : 1,5 à 1 : 2,5 ;
dans laquelle une teneur du monomère (méth)acrylate représenté par la Formule 1 est de 5 parties en poids ou plus et de 35 parties en poids ou moins sur la base de 100 parties en poids du mélange de monomères et
dans laquelle une teneur du monomère (méth)acrylate contenant un groupe alkyle est de 50 parties en poids ou plus et de 75 parties en poids ou moins sur la base de 100 parties en poids du mélange de monomères.

2. Composition adhésive selon la revendication 1, dans laquelle un rapport en poids du monomère (méth)acrylate représenté par la Formule 1 sur le monomère (méth)acrylate contenant un groupe polaire est de 7 : 1 à 2 : 1.

3. Composition adhésive selon la revendication 1, dans laquelle une teneur du monomère (méth)acrylate contenant un substituant cyclique est de 5 parties en poids ou plus et de 20 parties en poids ou moins sur la base de 100 parties en poids du mélange de monomères.

4. Ruban adhésif sans substrat comprenant :
un film de décollement ; et
une couche adhésive ménagée sur une surface du film de décollement et comprenant un produit durci de la composition adhésive selon la revendication 1.

5. Ruban adhésif sans substrat selon la revendication 4, dans lequel une distance de rupture de la couche adhésive est de 40 mm ou moins lorsque la couche adhésive est fixée à un support d'adhérence, et la couche adhésive est ensuite étirée à un angle de 90 degrés et à une vitesse de 2,4 m/min.

6. Ruban adhésif sans substrat selon la revendication 4, dans lequel la couche adhésive possède une résistance au cisaillement de 106,402 kPa (7 kgf/pouce²) ou plus et de 182,404 kPa (12 kgf/pouce²) ou moins à 85 °C ;
dans lequel la résistance au cisaillement est mesurée selon le procédé de la description.

7. Ruban adhésif sans substrat selon la revendication 4, dans lequel la couche adhésive possède une épaisseur de 10 µm ou plus à 80 µm ou moins.
